# FASCICULE DE BREVET EUROPEEN

(11) **EP 2 708 169 B1**
(45) Date de publication et mention de la délivrance du brevet: **17.06.2015**
(21) Numéro de dépôt: 13182871.7
(22) Date de dépôt: 03.09.2013
(51) Int. Cl.: A47J 43/046

(54) **Appareil ménager pour émulsionner ou mélanger une préparation alimentaire fluide dont le couvercle comprend une trémie**
Haushaltsgerät zum Emulgieren oder Mischen einer flüssigen Nahrungsmittelzubereitung, in dessen Deckel ein Trichter integriert ist
Kitchen appliance for emulsifying or mixing a fluid food preparation, the lid of which includes a hopper

(30) Priorité: 17.09.2012 FR 1258709
(43) Date de publication de la demande: 19.03.2014
(73) Titulaire: SEB S.A., 69130 Ecully (FR)
(72) Inventeur: Hiron, Frédéric, 72130 SAINT OUEN DE MIMBRE (FR)
(74) Mandataire: Bourrières, Patrice

(56) Documents cités:
- EP-A2- 0 131 548
- WO-A1-02/051293
- JP-A- 3 295 518
- JP-U- H0 310 833

## Description

La présente invention concerne le domaine technique des appareils ménagers utilisés pour émulsionner ou mélanger des préparations alimentaires fluides tels que, par exemple mais non exclusivement, les appareils managers utilisés pour émulsionner des boissons chaudes ou froides à base de lait appelés «mousseurs» à lait.

Il est connu des appareils ménagers pour mélanger ou émulsionner des préparations alimentaires comprenant un récipient qui est équipé d'un couvercle amovible et qui comprend, à proximité du fond du récipient, un outil rotatif pour émulsionner ou mélanger la préparation alimentaire. Le récipient est porté par un châssis comprenant un moteur électrique associé à des moyens d'entrainement de l'outil rotatif en rotation. Le couvercle amovible comprend en outre une trémie d'introduction d'ingrédients dans le récipient, qui comprend une ouverture d'introduction située sur le ou au dessus du couvercle et un orifice de sortie situé en dessous du couvercle. Un appareil est décrit dans le document JP 3295518.

Un tel appareil permet effectivement d'exécuter des préparations alimentaires mais présente l'inconvénient d'être relativement bruyant et il est donc apparu le besoin d'un appareil ménager pour émulsionner ou mélanger une préparation alimentaire fluide moins bruyant que les appareils selon l'art antérieur.

Afin d'atteindre cet objectif, l'invention concerne un appareil ménager pour émulsionner ou mélanger une préparation alimentaire fluide comprenant :
un récipient qui est équipé d'un couvercle amovible et qui comprend, à proximité du fond du récipient, un outil rotatif pour émulsionner ou mélanger la préparation alimentaire,
un châssis supportant le récipient et comprenant un moteur électrique associé à des moyens d'entrainement de l'outil rotatif en rotation,
le couvercle amovible qui comprend une trémie d'introduction d'ingrédients dans le récipient, qui comprend une ouverture d'introduction située sur le ou au dessus du couvercle et un orifice de sortie situé en dessous du couvercle.

Selon l'invention, la trémie d'introduction est coudée et comporte une paroi de fond comprenant une face orientée vers l'intérieur du récipient qui porte des moyens de guidage en rotation de l'outil rotatif. La mise en oeuvre d'une telle trémie coudée permet d'orienter les ingrédients vers la périphérie du récipient en évitant les projections de préparations et permet également de présenter une paroi de fond qui supporte des moyens de guidage de l'outil rotatif permettant de réduire le bruit induit par le fonctionnement de l'outil rotatif.

Selon l'invention les moyens de guidage peuvent être réalisés de toute façon appropriée. Ainsi selon une première forme de réalisation de l'invention, les moyens de guidage comprennent un pion destiné à venir s'insérer dans un alésage complémentaire de l'outil rotatif.

Selon une deuxième forme de réalisation, les moyens de guidage comprennent un alésage de réception d'un doigt de guidage porté par l'outil rotatif.

Selon une variante de cette deuxième forme de réalisation, l'alésage comprend une ouverture évasée.

Selon une caractéristique de l'invention visant à réduire les risques de projection lors du fonctionnement de l'outil rotatif, le plan de la section d'entrée de l'ouverture d'introduction forme avec le plan de la section de sortie de l'orifice de sortie un angle compris entre 70° et 90°.

Selon une autre caractéristique de l'invention, la paroi de fond comporte une face orientée vers l'ouverture d'introduction concave. Une telle conformation de la trémie permet de diriger les ingrédients vers une région périphérique du récipient.

Selon encore une autre caractéristique de l'invention, l'ouverture d'introduction est délimitée par une collerette périphérique qui s'étend en saillie d'une face supérieure du couvercle et qui forme des moyens de préhension. Un tel mode de réalisation permet de faciliter la préhension du couvercle.

Selon une variante de cette caractéristique, la collerette périphérique présente une forme tronconique convergeant vers l'intérieur du récipient.

Selon une autre variante de cette caractéristique, la collerette périphérique est centrée par rapport au couvercle.

Selon une caractéristique de l'invention, l'orifice de sortie présente une section de sortie comprise entre 3 et 7 cm², de préférence égale à 6 cm².

Cette caractéristique permet d'introduire des ingrédients solides de bonne taille dans le récipient par la trémie, par exemple des carreaux de chocolat.

Selon une autre caractéristique de l'invention, le couvercle comprend un rebord périphérique qui porte un joint d'étanchéité destiné à coopérer avec un bord périphérique du récipient.

Selon encore une autre caractéristique de l'invention, le récipient est adapté de manière amovible sur le châssis.

Selon encore une autre caractéristique de l'invention, l'outil est rotatif autour d'un axe Δ incliné d'un angle α par rapport à la verticale, le fond du récipient étant sensiblement normal à l'axe Δ et présentant un point bas et en ce que l'orifice de sortie est orienté vers le point bas. Cette disposition permet d'introduire des ingrédients dans une préparation réalisée en petite quantité qui se trouve dans un point bas du fond incliné du récipient. Par cette disposition, le guidage d'un outil rotatif incliné par la trémie permet également de réduire le bruit induit par le fonctionnement de l'outil.

Avantageusement, l'ouverture d'introduction (32) est centrée par rapport à la face supérieure du couvercle (30).

Bien entendu, les différentes caractéristiques, variantes et formes de mise en oeuvre du procédé selon l'invention peuvent être associées les unes avec les autres selon diverses combinaisons dans la mesure où elles ne sont pas incompatibles ou exclusives les unes des autres.

Par ailleurs, diverses autres caractéristiques de l'invention ressortent de la description annexée effectuée en référence aux dessins qui illustrent des formes non limitatives de réalisation d'un appareil ménager, conforme à l'invention, pour émulsionner ou mélanger des préparations alimentaires fluides.
La figure 1 est une vue d'ensemble d'un appareil ménager, conforme à l'invention, pour émulsionner ou mélanger des préparations alimentaires fluides.
La figure 2 est une coupe axiale d'un récipient amovible de l'appareil ménager illustré à la figure 1.
La figure 3 est une coupe axiale d'un outil rotatif de l'appareil ménager illustré à la figure 1.
La figure 4 est une coupe axiale montrant une variante de réalisation d'un couvercle et d'un outil rotatif d'un appareil ménager, conforme à l'invention, pour émulsionner ou mélanger des préparations alimentaires fluides

Il est à noter que sur ces figures les éléments structurels et/ou fonctionnels communs aux différentes variantes peuvent présenter les mêmes références.

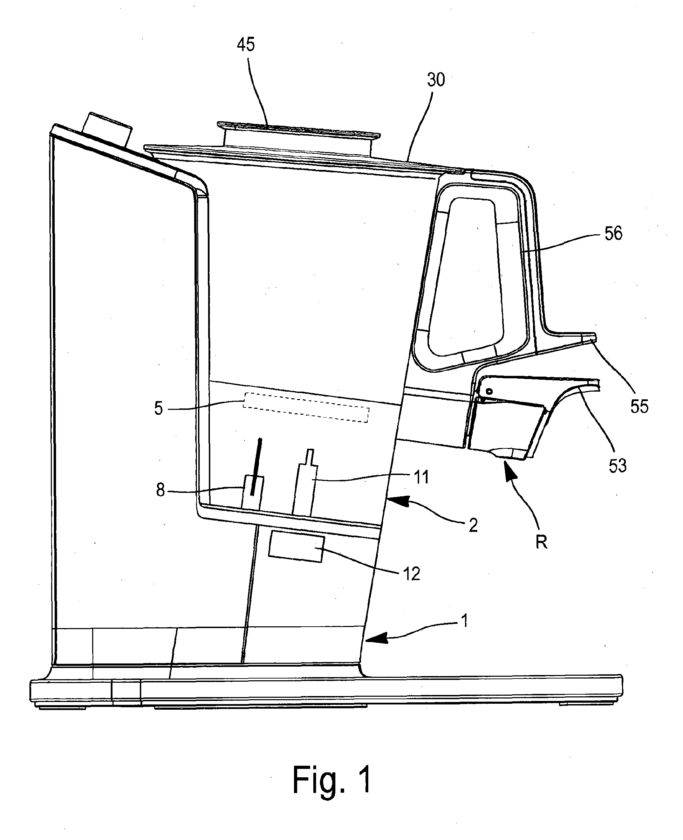

Un appareil ménager, selon l'invention, pour émulsionner ou mélanger une préparation alimentaire fluide comprend, comme le montre la figure 1, un châssis 1 supportant un récipient 2 qui, selon l'exemple illustré, est amovible ou démontable. Bien entendu, le récipient 2 pourrait également être intégré ou fixé de manière permanente au châssis 1.

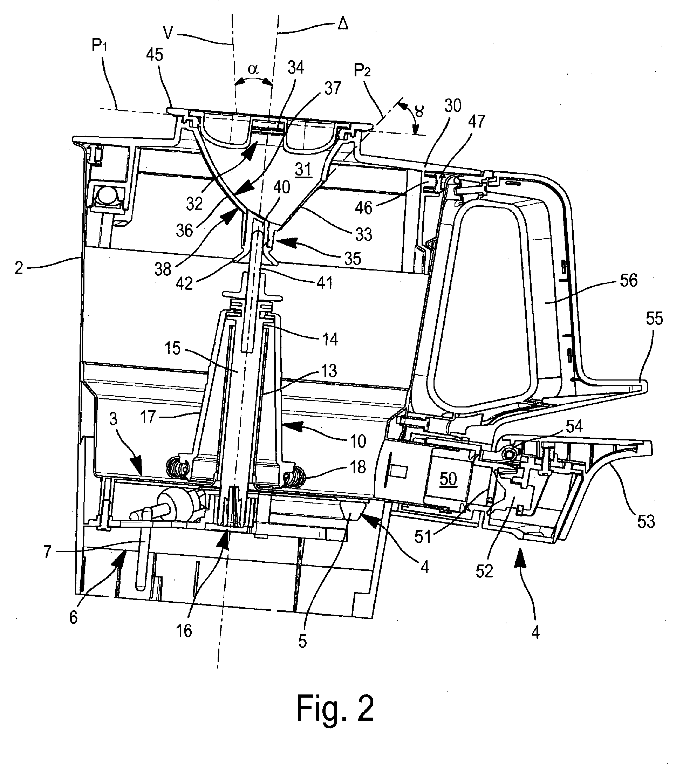

Le récipient 2 est muni d'un fond 3, visible à la figure 2, qui est associé à des moyens de chauffage 4 qui comprennent une résistance électrique 5 placée sous le fond 3 au contact de ce dernier de manière à permettre un chauffage par conduction des aliments contenus par le récipient sans être en contact direct avec ceux-ci. Afin d'assurer l'efficacité du chauffage, le fond 3 est de préférence réalisé en un matériau thermiquement conducteur tel que par exemple de l'acier inoxydable. Selon l'exemple illustré, la résistance électrique 5 est équipée d'un connecteur 6 comprenant deux fiches mâles 7 destinées à venir s'insérer dans deux fiches femelles complémentaires 8 qui équipent le châssis 1 et qui permettent un retrait aisé du récipient 2. Il est à noter qu'une seule fiche mâle 7 et une seule fiche femelle 8 sont visibles aux figures 1 et 2. Bien entendu, les moyens de chauffage 4 du contenu du récipient 2 pourraient être réalisés de toute autre manière appropriée et comprendre, par exemple, une source de micro-ondes, une source de rayons infrarouges ou encore un système d'induction électromagnétique induisant un chauffage du fond réalisé en partie au moins en un matériau ferromagnétique.

Le récipient 2 comprend également un robinet de distribution R situé à proximité de son fond 3 et permettant un soutirage du contenu du récipient comme cela apparaîtra par la suite. Il est à noter que le robinet de distribution R est de préférence amovible de manière à en faciliter le nettoyage.

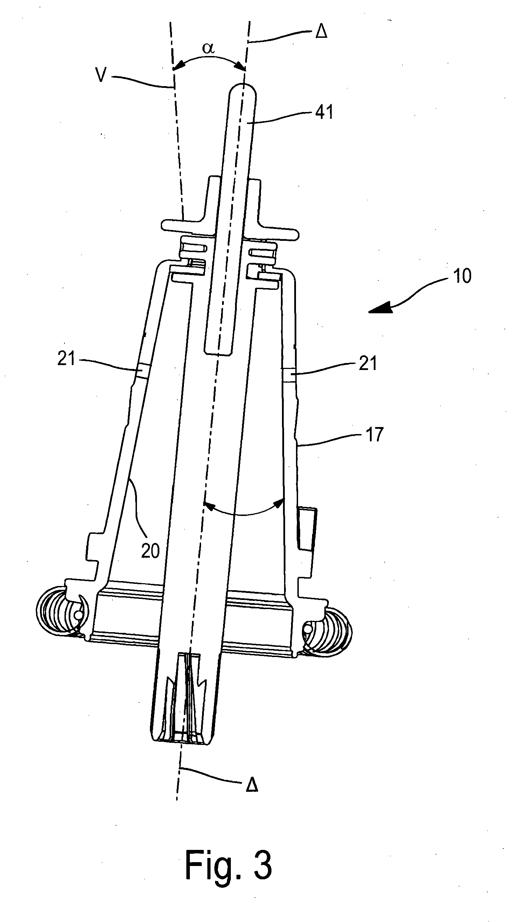

Afin de permettre le mélange ou l'émulsion des aliments qu'il contient, le récipient 2 comprend, à proximité de son fond 3, un outil rotatif 10 qui est mobile en rotation autour d'un axe Δ. L'outil rotatif 10 est représenté seul à la figure 3. Selon l'exemple illustré, l'entraînement en rotation de l'outil rotatif 10 est effectué de manière directe par accouplement mécanique dudit outil rotatif 10 avec des moyens 11 d'entraînement en rotation solidaires du châssis 1. Les moyens d'entraînement en rotation 11 sont alors associés à un moteur électrique 12 porté par le châssis 1. Le raccordement de l'outil rotatif 10 aux moyens d'entraînement 11 s'effectue au travers d'une cheminée 13 qui est cylindrique de révolution d'axe Δ et qui s'étend, partir du fond 3 du récipient 2, vers le haut en étant ouverte au niveau de son extrémité supérieure 14. La partie inférieure de la cheminée 13 se trouve alors en regard des moyens d'entraînement 11. Dans la mesure où l'extrémité supérieure 14 de la cheminée est située à distance du fond 3 du récipient 2 il est possible de remplir ce dernier, sans risque de débordement, jusqu'à un niveau situé en dessous de celui de l'extrémité supérieure 14.

L'outil rotatif 10 comprend alors un organe d'accouplement 15 destiné à s'étendre à l'intérieur de la cheminée 14 et à coopérer avec les moyens d'entraînement 11. L'organe d'accouplement 15 se présente, selon l'exemple illustré sous la forme d'un arbre cylindrique de révolution d'axe Δ qui possède une longueur supérieure à celle de la cheminée 13 et qui présente un diamètre extérieur inférieur au diamètre intérieur de la cheminée 13. L'arbre 15 possède en outre, au niveau de son extrémité inférieure, une conformation d'accouplement 16 destinée à coopérer avec les moyens d'entraînement 11. L'organe d'accouplement 15 porte, au niveau de son extrémité supérieure opposée à son extrémité inférieure, une jupe creuse 17 d'axe Δ qui s'étend vers le bas de manière à être située à l'extérieur de la cheminée 13 lorsque que l'organe accouplement 15 s'y trouve disposé. La jupe creuse 17 porte, à l'opposé de sa zone de liaison avec l'organe accouplement 15, au moins un organe de travail 18 formé, selon l'exemple illustré, par un enroulement hélicoïdal à spires non jointives d'un fil d'acier inoxydable disposé selon un tore d'axe Δ qui s'étend à la périphérie de la base de la jupe creuse 17. La hauteur de la jupe creuse 17 est alors adaptée pour que l'organe de travail se trouve à proximité immédiate du fond du récipient 2 sans toutefois frotter sur ce dernier.

Selon l'exemple illustré, l'axe de rotation Δ de l'outil rotatif est incliné d'un angle α par rapport à la verticale V. Afin d'éviter que lors de la rotation de l'outil rotatif 10, les liquides alimentaires contenus dans le récipient ne remontent sous l'effet de la force centrifuge le long de la paroi intérieure de la jupe creuse 17 jusqu'à atteindre l'extrémité supérieure 14 de la cheminée, la jupe creuse 17 s'évase vers le bas et sa surface intérieure 20 présente une forme tronconique dont les génératrices forment, avec l'axe Δ, un angle β supérieur ou égal à l'angle α.

Dans le même sens et afin d'éviter les risques d'écoulement de liquides alimentaires par la cheminée 13 lors de la rotation de l'outil rotatif 10, cette disposition de l'invention est de préférence mais non nécessairement complétée par la mise en oeuvre d'au moins un et de préférence plusieurs canaux radiaux 21 traversant la jupe creuse 17 de sorte que les liquides alimentaires susceptibles de se trouver sur la surface intérieure de la jupe se trouvent éjectés vers l'extérieur sous l'effet de la force centrifuge lors de la rotation de l'outil rotatif 10.

Par ailleurs, selon l'exemple illustré, afin de permettre un écoulement complet des liquides alimentaires contenus dans le récipient 2, le fond 3 est incliné vers le robinet R lorsque le châssis de l'appareil repose sur une surface sensiblement horizontale. De manière à assurer une efficacité optimale à l'outil rotatif 10, le fond 3 du récipient est alors de préférence sensiblement normal à l'axe Δ de rotation de l'outil rotatif 10 de sorte que l'organe de travail tourne dans un plan sensiblement parallèle au fond du récipient 2.

Afin d'éviter les projections de préparations alimentaires hors du récipient lors de la rotation de l'outil rotatif 10, l'appareil ménager comprend, comme le montre la figure 2, un couvercle 30 disposé sur la partie supérieure du récipient 2 de manière à l'obturer en partie au moins. Le couvercle 30 est de préférence amovible de manière à permettre un nettoyage aisé de l'intérieur du récipient 2 ainsi qu'un retrait de l'outil rotatif 10.

Le couvercle 30 comprend une trémie 31 d'introduction d'ingrédients dans le récipient 2. Une telle trémie 31 permet de verser des liquides alimentaires ainsi que d'introduire des ingrédients dans le récipient alors que l'outil rotatif 10 tourne sans risques de projection à l'extérieur du récipient. La trémie comprend une ouverture d'introduction 32 située sur le ou au-dessus du couvercle 30. Selon l'exemple illustré, l'ouverture d'introduction 32 se trouve sensiblement au-dessus de la face supérieure du couvercle 30. La trémie 31 d'introduction comprend également un orifice de sortie 33 qui est situé en dessous du couvercle 30 et débouche à l'intérieur du récipient 2. Dans le cas présent, l'ouverture d'introduction 32 est fermée par un bouchon amovible 34. De manière à limiter les risque de projections induites par le fonctionnement l'outil rotatif 10, le plan P1 de la section d'entrée de l'ouverture d'introduction 32 et le plan P2 de la section de sortie de l'orifice de sortie 33 forme un angle γ compris entre 70° et 90°. De plus, l'orifice de sortie 33 possède une section de sortie comprise entre 3 et 7 cm², de préférence égale à 6 cm² pour permettre l'introduction d'ingrédients de bonne taille.

Afin de garantir un fonctionnement aussi silencieux que possible à l'appareil ménager en assurant un guidage en rotation de l'outil rotatif 10 optimal, la trémie 31 d'introduction comprend des moyens de guidage 35 en rotation de l'outil rotatif 10.

Selon l'exemple illustré, la trémie 31 d'introduction comprend, à l'opposé de l'ouverture d'introduction 32, une paroi de fond 36 dont la face 37 orientée vers l'ouverture d'introduction 32 est concave et dont la face 38 orientée vers l'intérieur du récipient 2 porte les moyens de guidage 35 en rotation de l'outil rotatif 10.

Les moyens de guidage 35 en rotation de l'outil rotatif 10 peuvent être réalisés de différentes manières. Dans le cas présent, les moyens de guidage 35 comprennent un alésage 40 de réception d'un doigt de guidage 41 porté par l'outil rotatif 10. Afin de faciliter l'engagement du doigt de guidage 41 dans l'alésage 40, ce dernier comprend une ouverture évasée définie par un rebord tronconique 42 convergeant vers l'intérieur de l'alésage 40.

Comme cela à été indiqué précédemment, le couvercle 30 est amovible. Afin de faciliter sa prise en main, l'ouverture d'introduction 32 est centrée par rapport à la face supérieure du couvercle et comprend une collerette périphérique 45 qui se trouve également centrée par rapport au couvercle et qui forme des moyens de préhension. De plus, le couvercle 30 comprend un rebord périphérique 46 qui s'étend vers l'intérieur du récipient et qui porte un joint d'étanchéité 47 destiné à coopérer avec une partie supérieure du bord périphérique du récipient 2. Le joint d'étanchéité 47 assure le maintien du couvercle 30 par son frottement contre le bord périphérique du récipient 2.

Lorsque la préparation alimentaire exécutée au moyen de l'appareil ménager selon l'invention est prête, le robinet de distribution R est utilisé afin de permettre un soutirage de la préparation alimentaire.

À cet effet le robinet de distribution R comprend un canal de distribution 50 qui débouche à l'intérieur du récipient 2 et dont une bouche 51 située à l'opposé du récipient 2 est obturée par une vanne d'ouverture 52 reliée à un levier de manoeuvre 53. La vanne d'ouverture 52 est asservie en fermeture par le levier de manoeuvre 53 qui est soumis à l'action d'un ressort 54 qui tend à maintenir la vanne d'ouverture en position fermée contre la bouche 51 lorsque aucun effort extérieur n'est exercé sur le levier 53.

Afin de faciliter la manipulation du levier de manoeuvre 53 sans risquer de déstabiliser l'appareil ménager, le récipient comprend une languette fixe 55 située en regard du levier de manoeuvre 53 qui est alors conçu pour être mobile entre une position éloignée de la languette fixe, représentée figure 2, dans laquelle la vanne d'ouverture 52 est fermée et une position rapprochée de la languette fixe dans laquelle la vanne d'ouverture 52 est ouverte. Selon l'exemple illustré, le levier de manoeuvre 53 est mobile autour d'un axe sensiblement horizontal de sorte qu'il se déplace dans un plan sensiblement vertical. Par ailleurs, la languette fixe 55 est aménagée en partie basse d'une poignée de préhension 56 du récipient qui se trouve au-dessus du levier de manoeuvre 51.

Ainsi, lorsqu'un utilisateur souhaite soutirer la préparation alimentaire contenue dans le récipient 2, il pince à deux doigts le levier 53 et la languette fixe 55 de manière à rapprocher le levier 53 de cette dernière ce qui entraîne une ouverture de la bouche 51 et donc un écoulement du liquide contenu dans le récipient 2. Ce mode d'actionnement du levier mobile permet d'assurer un équilibrage des efforts exercés par l'utilisateur sur le récipient 2 de sorte que l'action sur le levier de manoeuvre ne peut induire un basculement du récipient. De plus, ce mode d'actionnement du levier de manoeuvre permet de le réaliser facilement alors que le récipient 2 est retiré du châssis 1 en étant tenu par la poignée 56.

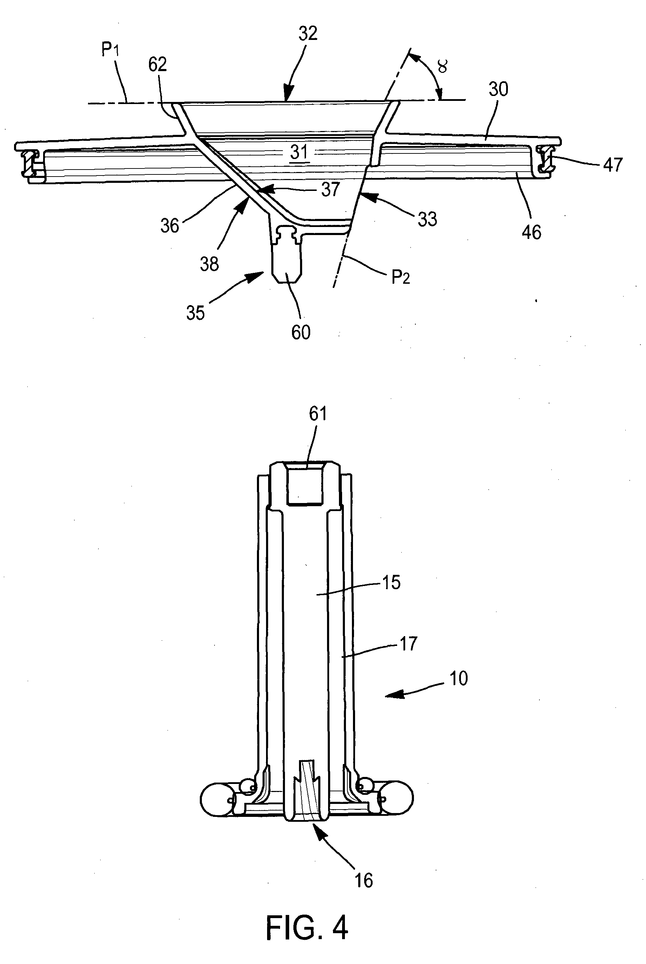

Selon l'exemple de réalisation décrit précédemment en relation avec la figure 2 notamment, les moyens de guidage 35 en rotation portés par la trémie 31 sont formés par un alésage 40 de réception d'un doigt de guidage 41 porté par l'outil rotatif 10. Toutefois, un tel mode de réalisation des moyens de guidage 35 n'est pas strictement nécessaire ainsi la figure 4 montre un autre exemple de réalisation selon lequel les moyens de guidage 35 comprennent un pion 60 qui est porté par la paroi de fond 36 de la trémie 31 d'introduction et qui est destiné à venir s'insérer dans un alésage complémentaire 61 de l'outil rotatif 10.

Par ailleurs selon cet exemple, l'ouverture d'introduction 32 est délimitée par une collerette périphérique 62 qui s'étend en saillie de la face supérieure du couvercle 30 et qui forme des moyens de préhension de ce dernier. De plus la collerette périphérique 62 est centrée par rapport au couvercle 30 et présente une forme tronconique convergeant vers l'intérieur de ce dernier.

Bien entendu diverses autres modifications peuvent être apportées À l'appareil ménager selon l'invention dans le cadre des revendications annexées.

## Revendications

1. Appareil ménager pour émulsionner ou mélanger une préparation alimentaire fluide comprenant :
- un récipient (2) qui est équipé d'un couvercle (30) amovible et qui comprend, à proximité du fond (3) du récipient (2), un outil rotatif (10) pour émulsionner ou mélanger la préparation alimentaire,
- un châssis (1) supportant le récipient (2) et comprenant un moteur électrique (12) associé à des moyens (11) d'entrainement de l'outil rotatif (10) en rotation,
- le couvercle (30) amovible qui comprend une trémie (31) d'introduction d'ingrédients dans le récipient (2), qui comprend une ouverture d'introduction (32) située sur le ou au dessus du couvercle (30) et un orifice de sortie (33) situé en dessous du couvercle (30),
**caractérisé en ce que** la trémie (31) d'introduction est coudée et comporte une paroi de fond (36) comprenant une face (38) orientée vers l'intérieur du récipient (2) qui porte des moyens de guidage (35) en rotation de l'outil rotatif (10).

2. Appareil ménager selon la revendication 1, **caractérisé en ce que** les moyens de guidage (35) comprennent un pion (60) destiné à venir s'insérer dans un alésage complémentaire (61) de l'outil rotatif (10).

3. Appareil ménager selon la revendication 1, **caractérisé en ce que** les moyens de guidage (35) comprennent un alésage (40) de réception d'un doigt de guidage (41) porté par l'outil rotatif (10).

4. Appareil ménager selon la revendication 3, **caractérisé en ce que** l'alésage (40) comprend une ouverture évasée.

5. Appareil ménager selon l'une des revendications précédentes, **caractérisé en ce que** le plan de la section d'entrée de l'ouverture d'introduction (32) forme avec le plan de la section de sortie de l'orifice de sortie (33) un angle compris entre 70° et 90°.

6. Appareil ménager selon l'une des revendications précédentes, **caractérisé en ce que** la paroi de fond (36) comporte une face (37) orientée vers l'ouverture d'introduction (32) qui est concave.

7. Appareil ménager selon l'une des revendications précédentes, **caractérisé en ce que** l'ouverture d'introduction (32) est délimitée par une collerette périphérique (45, 62) qui s'étend en saillie d'une face supérieure du couvercle (30) et qui forme des moyens de préhension.

8. Appareil ménager selon la revendication 7, **caractérisé en ce que** la collerette périphérique (62) présente une forme tronconique convergeant vers l'intérieur du récipient (2).

9. Appareil ménager selon la revendication 8, **caractérisé en ce que** la collerette périphérique (62) est centrée par rapport au couvercle (30).

10. Appareil ménager selon l'une des revendications précédentes, **caractérisé en ce que** l'orifice de sortie (33) présente une section de sortie comprise entre 3 et 7 cm², de préférence égale à 6 cm².

11. Appareil ménager selon l'une des revendications précédentes, **caractérisé en ce que** le couvercle (30) comprend un rebord périphérique (46) qui porte un joint d'étanchéité (47) destiné à coopérer avec un bord périphérique du récipient (2).

12. Appareil ménager selon l'une des revendications précédentes, **caractérisé en ce que** le récipient (2) est adapté de manière amovible sur le châssis (1).

13. Appareil ménager selon l'une des revendications précédentes, **caractérisé en ce que** l'outil (10) est rotatif autour d'un axe Δ incliné d'un angle a par rapport à la verticale, le fond (3) du récipient (2) étant sensiblement normal à l'axe Δ et présentant un point bas et **en ce que** l'orifice de sortie (33) est orienté vers le point bas.

14. Appareil ménager selon l'une des revendications précédentes, **caractérisé en ce que** l'ouverture d'introduction (32) est centrée par rapport à la face supérieure du couvercle (30).

## Patentansprüche

1. Haushaltsgerät zum Emulgieren oder Mischen eines flüssigen Nahrungsmittels, welches Folgendes umfasst:
- einen Behälter (2), der mit einem abnehmbaren Deckel (30) ausgerüstet ist und in der Nähe des Bodens (3) des Behälters (2) ein drehbares Werkzeug (10) zum Emulgieren oder Mischen des Nahrungsmittels umfasst,
- ein Gestell (1), das den Behälter (2) abstützt und einen Elektromotor (12) umfasst, der mit Mitteln (11) zum Drehantrieb des drehbaren Werkzeugs (10) verbunden ist,
- den abnehmbaren Deckel (30), der einen Trichter (31) zum Einfüllen von Zutaten in den Behälter (2) umfasst, der eine auf oder über dem Deckel (30) befindliche Einfüllöffnung (32) und eine unter dem Deckel (30) befindliche Austrittsöffnung (33) umfasst,
**dadurch gekennzeichnet, dass** der Einfülltrichter (31) gekrümmt ist und eine Bodenwand (36) umfasst, die eine zum Innern des Behälters (2) ausgerichtete Seite (38) aufweist, die Mittel (35) zur drehenden Führung des drehbaren Werkzeugs (10) trägt.

2. Haushaltsgerät nach Anspruch 1, **dadurch gekennzeichnet, dass** die Führungsmittel (35) einen Zapfen (60) umfassen, der dafür vorgesehen ist, in eine Zusatzbohrung (61) des drehbaren Werkzeugs (10) zu gleiten.

3. Haushaltsgerät nach Anspruch 1, **dadurch gekennzeichnet, dass** die Führungsmittel (35) eine Bohrung (40) zur Aufnahme eines Führungsstiftes (41) umfassen, der von dem drehbaren Werkzeug (10) getragen wird.

4. Haushaltsgerät nach Anspruch 3, **dadurch gekennzeichnet, dass** die Bohrung (40) eine erweiterte Öffnung umfasst.

5. Haushaltsgerät nach einem der vorhergehenden Ansprüche, **dadurch gekennzeichnet, dass** die Ebene des Eingangsquerschnitts der Einfüllöffnung (32) mit der Ebene des Ausgangsquerschnitts der Austrittsöffnung (33) einen Winkel zwischen 70° und 90° bildet.

6. Haushaltsgerät nach einem der vorhergehenden Ansprüche, **dadurch gekennzeichnet, dass** die Bodenwand (36) eine zur Einfüllöffnung (32) ausgerichtete Seite (37) aufweist, die konkav ist.

7. Haushaltsgerät nach einem der vorhergehenden Ansprüche, **dadurch gekennzeichnet, dass** die Einfüllöffnung (32) durch einen umlaufenden Bund (45, 62) begrenzt wird, der aus einer Oberseite des Deckels (30) herausragt und Griffmittel bildet.

8. Haushaltsgerät nach Anspruch 7, **dadurch gekennzeichnet, dass** der umlaufende Bund (62) kegelstumpfförmig ist und zum Innern des Behälters (2) hin konvergiert.

9. Haushaltsgerät nach Anspruch 8, **dadurch gekennzeichnet, dass** der umlaufende Bund (62) zum Deckel (30) zentriert ist.

10. Haushaltsgerät nach einem der vorhergehenden Ansprüche, **dadurch gekennzeichnet, dass** die Austrittsöffnung (33) einen Ausgangsquerschnitt zwischen 3 und 7 cm² und vorzugsweise von 6 cm² hat.

11. Haushaltsgerät nach einem der vorhergehenden Ansprüche, **dadurch gekennzeichnet, dass** der Deckel (30) einen umlaufenden Rand (46) umfasst, der eine Dichtung (47) trägt, die dafür vorgesehen ist, mit einem umlaufenden Rand des Behälters (2) zusammenzuwirken.

12. Haushaltsgerät nach einem der vorhergehenden Ansprüche, **dadurch gekennzeichnet, dass** der Behälter (2) abnehmbar auf dem Gestell (1) angebracht ist.

13. Haushaltsgerät nach einem der vorhergehenden Ansprüche, **dadurch gekennzeichnet, dass** das Werkzeug (10) um eine Achse Δ drehbar und um einen Winkel a in Bezug auf die Senkrechte geneigt ist, wobei der Boden (3) des Behälters (2) im Wesentlichen senkrecht zu der Achse Δ steht und einen Tiefpunkt aufweist, und dass die Austrittsöffnung (33) zu dem Tiefpunkt ausgerichtet ist.

14. Haushaltsgerät nach einem der vorhergehenden Ansprüche, **dadurch gekennzeichnet, dass** die Einfüllöffnung (32) zur Oberseite des Deckels (30) zentriert ist.

## Claims

1. Domestic appliance for emulsifying or mixing a liquid food preparation comprising:
- a container (2) fitted with a removable cover (30) and a rotary tool (10) for emulsifying or mixing the food preparation, close to the bottom (3) of the container (2),
- a frame (1) supporting the container (2), with an electric motor (12) linked to the drive means (11) of the rotary tool (10) in rotation,
- the removable cover (30) comprises a dosing feeder (31) for inserting ingredients to the container (2), comprising a feed opening (32) on or above the cover (30) and an outlet opening (33) located below the cover (30),
wherein the dosing feeder (31) is angled and has a bottom wall (36) comprising a face (38) pointing towards the interior of the container (2) with guide components (35) in rotation of the rotary tool (10).

2. Domestic appliance according to claim 1, wherein the guide means (35) comprise a pin (60) intended to be inserted into an additional bore (61) of the rotating tool (10).

3. Domestic appliance according to claim 1, wherein the guide components (35) comprise a bore (40) intended to receive a guide pin (41) carried by the rotating tool (10).

4. Domestic appliance according to claim 3, wherein the bore (40) comprises a flared opening.

5. Domestic appliance according to one of the preceding claims, wherein the plane of the section of the feed opening (32) forms with the plane of the section of the outlet opening (33) an angle between 70 ° and 90 °.

6. Domestic appliance according to one of the preceding claims, wherein the bottom wall (36) has a face (37) pointing towards the feed opening (32) which is concave.

7. Domestic appliance according to one of the preceding claims, wherein the feed opening (32) is delimited by a peripheral flange (45, 62) which protrudes from an upper side of the cover (30) and forms gripping means.

8. Domestic appliance according to claim 7, wherein the peripheral flange (62) has a truncated form converging towards the interior of the container (2).

9. Domestic appliance according to claim 8, wherein the peripheral flange (62) is centred relative to the container (30).

10. Domestic appliance according to one of the preceding claims, wherein the outlet opening (33) has an output section of between 3 and 7 cm², preferably 6 cm².

11. Domestic appliance according to one of the preceding claims, wherein the cover (30) comprises a peripheral rim (46) which carries a seal (47) intended to cooperate with a peripheral edge of the container (2).

12. Domestic appliance according to one of the preceding claims wherein the container (2) is fitted on the frame in a way that it can be removed (1).

13. Domestic appliance according to one of the preceding claims wherein the tool (10) is rotatable about an axis Δ inclined at an angle from the vertical, while the bottom (3) of the container (2) is substantially normal to the axis Δ and has a low point and wherein the outlet opening (33) points towards the bottom.

14. Domestic appliance according to one of the preceding claims, wherein the feed opening (32) is centred relative to the upper side of the cover (30).
